Europäisches Patentamt

European Patent Office

Office européen des brevets

(11) Publication number: **0 440 925 A1**

# EUROPEAN PATENT APPLICATION

(21) Application number: **90123772.7**

(22) Date of filing: **11.12.90**

(51) Int. Cl.5: **A01N 1/02**

(30) Priority: **13.12.89 JP 322999/89**

(43) Date of publication of application:
**14.08.91 Bulletin 91/33**

(84) Designated Contracting States:
**BE CH DE DK ES FR GB IT LI NL SE**

(71) Applicant: **THE GREEN CROSS CORPORATION**
**3-3, Imabashi 1-chome Chuo-ku**
**Osaka-shi Osaka 541(JP)**

(72) Inventor: **Kuroda, Yoshikazu, c/o Kobe**
**University**
**School of Medicine, 5-1, Kusunoki-cho**
**7-chome**
**Chuo-ku, Kobe-shi, Hyogo 650(JP)**
Inventor: **Saito, Yoichi, c/o Kobe University**
**School of Medicine, 5-1, Kusunoki-cho**
**7-chome**
**Chuo-ku, Kobe-shi, Hyogo 650(JP)**
Inventor: **Murashima, Ryoichiro, The Green**
**Cross Corporation**
**Central Research Lab., 2-1180-1,**
**Shodaiontani**
**Hirakata-shi, Osaka 573(JP)**
Inventor: **Yamanouchi, Koichi, The Green**
**Cross Corporation**
**Central Research Lab., 2-1180-1,**
**Shodaiontani**
**Hirakata-shi, Osaka 573(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) Internal organ-preserving liquid and method for preserving internal organs.

(57) Organ-preserving liquids comprising, as an active ingredient, an undiluted liquid of a perfluorocarbon compound or an emulsion containing the same at a high concentration and methods for preserving internal organs are disclosed. The internal organ-preserving liquids of the present invention are extremely useful in the clinical situations as organ-preserving liquids in organ transplantation for mammals including humans, especially as preserving liquids for internal organs having likelihood of thermal ischemic disorders.

According to the present invention, internal organs (e.g. pancreas, liver) are preserved by immersing the internal organs in an undiluted liquid of a perfluorocarbon or an emulsion thereof at a high concentration, preferably, with oxygen bubbling.

EP 0 440 925 A1

## INTERNAL ORGAN-PRESERVING LIQUID AND METHOD FOR PRESERVING INTERNAL ORGANS

This invention relates to organ-preserving liquids comprising, as an active ingredient, an undiluted liquid of a perfluorocarbon compound or an emulsion containing the same at a high concentration and to methods for preserving internal organs.

BACKGROUND OF THE INVENTION

As internal organ (organ to be transplanted) preservation methods, there are simple cooling preservation methods and low temperature perfusing preservation methods. The simple cooling preservation methods do not require any particular preserving apparatus, making handling easy and cheap, and transportation of internal organs easy. (See Literature 1)

It is reported that the simple cooling preservation methods are in general more excellent than the low temperature perfusing preservation methods in the preservation of internal organs, particularly pancreas. (Literature 2)

However, the low temperature perfusing preservation methods have a merit in that oxygen can be continuously supplied to organs during preservation. Consequently, there was established a two-phase cooling preservation method (Euro-Collins liquid/perfluorocarbon compound) which has both the merit of the simple cooling preservation methods and that of the low temperature perfusing preservation methods in combi nation, according to which oxygen can be sufficiently supplied (Literatures 3,4).

| Literature 1 | Transplant Proc., *6*, 279-282-(1974) |
| Literature 2 | Surg. Clin. of North Am., *66*, 617(1986) |
| Literature 3 | Transplantation., *46*, 457(1988) |
| Literature 4 | Transplant Proc., *21*, 1376-(1989) |

SUMMARY OF THE INVENTION

An object of the invention is to provide new organ-preserving liquids.

Another object of the invention is to provide novel methods for preserving internal organs.

In view of the foregoing situations, the present inventors have conducted further studies and, as a result, found that by simply immersing organs, in the presence of oxygen, in an undiluted liquid of a perfluorocarbon compound or an emulsion containing the same at a high concentration, the internal organs (specifically, pancreas and liver) can be preserved effectively, which resulted in the completion of the present invention.

This invention relates to internal organ-preserving liquids comprising, as an active ingredient, an undiluted liquid of a perfluorocarbon compound or an emulsion containing the same at a high concentration.

This invention also relates to methods for preserving internal organs, which comprises bringing the internal organs into contact with an undiluted liquid of a perfluorocarbon compound or an emulsion containing the same at a high concentration.

Perfluorocarbons are excellent in dissolving oxygen and their use as an artificial blood has drawn attention. Many of perfluorocarbon compounds are in liquid forms at room temperature. They have characteristic properties such that they are colorless, transparent, odorless, of specific gravity of 1.7-1.9, chemically very stable (namely, inactive) and greatly hydrophobic. The boiling points of most perfluorocarbon compounds range from 100 to 200°C, and while solubilities of oxygen therein somewhat vary depending on the kind of perfluorocarbon compounds, they are usually about 30-60(V/V)%.

According to the present invention, internal organs (e.g. pancreas, liver) are preserved by immersing the internal organs in an undiluted liquid of a perfluorocarbon or an emulsion thereof at a high concentration, preferably, with oxygen bubbling.

Therefore, there is obviously no particular limitation to perfluorocarbons to be used in the present invention as long as they are chemically inactive, capable of dissolving oxygen and in a liquid form at room temperature. As preferred examples of the perfluorocarbon compounds include, for example, perfluorohydrocarbons having 9-12 carbon atoms and perfluoro tert-amines having 9-12 carbon atoms. Examples of specific perfluorocarbon compounds include, for example, perfluorocycloalkane, perfluoroalkylcycloalkane, perfluorocyclohexane, perfluorodecalin, perfluoroalkyldecalin, perfluoroalkyltetrahydropyrane, perfluoroalkyltetrahydrofuran, perfluoroalkane, perfluorotert-alkylamine, perfluoro N,N-dialkylcyclohexylamine, perfluoroalkylpiperidine, perfluoroalkylmorpholine, perfluoroadamantane, perfluoroalkyladamantane, etc. (See Japanese Patent Unexamined Publication under Kokai No. 69219/1975). Other preferred examples of perfluorocarbon compounds include, for example, perfluoro-N-methylperhydroquinoline, perfluoro-N-methyldecahydroisoquinoline, perfluoro-4-methyloctahydroquinolizine, perfluoro-3-methyloctahydroquinolizine, perfluoro-2-methyloctahydroquinolizine, perfluoro-1-methyloctahydroquinolizine, perfluoro-9a-methyloctahydroquinolizine, perfluoro-4-ethyloctahydroquinolizine, etc.

Solubilities of oxygen in perfluorocarbon compounds to be used in the present invention are generally 40-60(v/v)% at a liquid temperature of 36°C, preferably 45-55(v/v)%.

Said perfluorocarbon compounds are used for preservation of internal organs with oxygen contained at high concentration therein. Accordingly, oxygen is dissolved at high concentrations in the perfluorocarbon compounds in advance, or more preferably, the perfluorocarbon compounds are put to use with oxygen bubbling therein.

The perfluorocarbon compounds are used as they are without being diluted or in a form of emulsion containing them at a high concentration. The emulsions may be prepared by known methods, which are exemplified by the methods described in Japanese Unexamined Patent Publication under Kokai No. 225013/1983.

In the present invention, the emulsions means oil-in-water emulsions with perfluorocarbon compounds dispersed in water, and the concentration of the perfluorocarbon compounds is not less than 50%(w/v), preferably not less than 70%(w/v).

In the preparation of the emulsions, high molecular non-ionic surfactants, phospholipids, or the like are employed at 1 - 5w/v%.

The high molecular non-ionic surfactants have a molecular weight of 2000 to 20000 and are exemplified by polyoxyethylene-polyoxypropylene copolymer, polyoxyethylene fatty acid ester, polyoxyethylene castor oil derivatives, or the like. Examples of the phospholipids include yolk phospholipid, soybean phospholipid, or the like. If desired, there may be contained as an emulsifier, fatty acids having 8 to 22, preferably 14 - 20 carbon atoms, their physiologically acceptable salts (e.g. alkali metal salts such as sodium salt, potassium salt, etc., monoglyceride), or the like. Examples thereof include caprylic acid, capric acid, lauric acid, myristic acid, palmitic acid, stearic acid, behenic acid, palmitoleic acid, oleic acid, linoleic acid, arachidonic acid, their sodium or potassium salts, their monoglycerides, or the like. The emusifier is added in an amount of 0.001 - 0.01w/v%.

As a medium, a physiologically acceptable solution such as physiological saline, lactated Ringer's solution, or the like may be used.

If neccesary, an agent for making the emulsion isotonic such as glycerol, or a plasma expander such as HES, dextran, etc. for adjustment of colloid osmotic pressure may be further added.

The emulsion can be prepared by mixing each ingredient in an optional order to give a crude emusion, which is homogenized by an emulsifier (e.g. Mantongolin-type emulsification machine) at a particle diameter of below 0.3µ.

The organ-preserving liquid of the invention enables long-term preservation of internal organs by bringing the internal organs into contact with the liquid, particularly by immersing them in said liquid.

Using the preserving liquid of the present invention, internal organs (particularly pancreas and liver) can be preserved by simply cooling surface at 0-30°C, preferably at 0-10°C, for 72-120 hours. Even when there is a thermal ischemic disorder, good results were obtained.

Therefore, the internal organ-preserving liquids of the present invention are extremely useful in the clinical situations as organ-preserving liquids in organ transplantation for mammals including humans, especially as preserving liquids for internal organs having likelihood of thermal ischemic disorders.

EXAMPLES

Example 1

Perfluorodecalin (undiluted liquid) was used as a preserving liquid of the present invention.

Example 2

To 500 ml of distilled water for injection was added 30 g of an egg yolk phospholipid, and the mixture was stirred with a mixer to obtain a crude emulsion. To the emulsion was added 500 g of perfluoro-N-methyldecahydroisoquinoline, and the mixture was further stirred with a mixer. Then, 15 ml of a phosphate buffer was added thereto, and the mixture was stirred and the total amount thereof was adjusted to 1ℓ.

This crude emulsion was put in the vessel of a jet-type homogenizer (emulsifier, Mantongolin Co.) and circulated therein. Emulsification was conducted under a nitrogen gas flow at a pressure of 100-600 kg/cm² while keeping the liquid temperature at 65-70°C.

The emulsified preparation was filled in vials for injections, which were upon displacement with a nitrogen gas, sealed and heat-sterilized. The obtained emulsified preparations were preserved at cool places.

The concentration of the perfluorocarbon compound was 50%(w/v).

The particle diameters in the emulsified preparations measured by the light scattering method was 0.2 µm.

Experimental Example 1

Mongrel dogs (weighing 12-18 kg) were used as the experimental animals and perfluorodecalin was used as the perfluorocarbon compound.

## Operation Procedure

The dogs were kept under anesthesia with sodium pentbarbital (at the dose of 25 mg/kg body weight). The sinister of the pancreas together with the splenic artery and vein satellite thereto were extracted with great care, followed by extraction of the spleen. The fragments of a portion of the pancreas was washed with 50 ml of cooled Euro Collins liquid added with heparin (1000 unit/50 ml) through the splenic artery, and immediately or after preservation, transplanted into the neck (Literatures 5, 6). When the self transplantation was conducted, the remaining pancreas was stimulated. For three days after the operation, 10% glucose (at the dose of 30 ml/kg body weight) and penicilin for injection (at the dose of 25 mg/kg body weight) dissolved in physiological saline were administered to the dogs. Thereafter, the standard diet was given.

Literature 5    Transplant Proc., *19*, 3501- (1987)

Literature 6    Transplantation., *44*, 583(1987)

## Preservation method

During the period of preservation, the fragments of the pancreas were immersed in a perfluorocarbon compound in a wirenet-compressor. Without the compressor, the fragments of the pancreas float on the perfluorocarbon compound since they have different specific gravities. Throughout the period of preservation, oxygen and carbon dioxide (95% : 5%) were continuously supplied into the perfluorocarbon compounds via a frit glass (an instrument in which frit obtained by breaking glass into fine pieces was coated on a glass vessel and baked thereto) at the flow rate of 50-100 ml/minute.

## Functional study

Blood sugar values were measured daily for one week after the operation for self-transplantation and twice a week thereafter. Tolerance test against sugar intravenously administered was conducted two weeks after the operation. The test was conducted by injecting glucose (at the dose of 0.5 g/kg body weight) at one shot intravenously and measuring blood sugar values 1, 5, 10, 20, 30, 60, 90 and 120 minutes later. The K values were calculated from the blood sugar level measured at the lapse of 5-60 minutes. When normal blood level was maintained for at least 5 days after the transplantation, the preservation of the internal organ was looked upon as successful.

## Histomorphological study

The biopsy of the fragments of the pancreas was conducted at the time of operation, after 48 hours' preservation, 2 weeks after the self-transplantation and at the time of partial biopsy. The tissues were immersed in a Zamboni's solution, fixed with paraffin and thereafter dyed with hematoxylin and eosin.

## Experimental procedure

The experimental animals were divided into three groups. The groups to be experimented consist of a group in which the fragments of the portion preserved in the perfluorocarbon compound at 4°C with simple oxygen bubbling were transplanted (First Group consisting of 5 animals) and a group which was subjected to the same treatment without simple oxygen bubbling (Second Group consisting of 5 animals). The control group (Third Group consisting of 5 animals) consists of dogs to which the fragments of a fresh portion of the pancreas (which was not preserved) were transplanted.

## Statistics

Statistic analysis was conducted in accordance with Student's t- evaluation.

The rate of functional success was 0% (0/5) in the dogs (Second Group) after 48 hours' simple cooling preservation of the pancreas in the perfluorocarbon compound without simple oxygen bubbling. In contrast, the rate of functional success was 80% (4/5) in the dogs (First Group) after 48 hours' simple cooling preservation of the pancreas in the perfluorocarbon compound with simple oxygen bubbling. The mean K value of First Group was 1.87 ±0.28 two weeks after self-transplantation. On the other hand, that of Third Group (control group) was 1.90±0.34.

From the biopsy after preservation, histomorphological studies of First Group observed an almost normal construction of exocrine secretion and endocrine secretion tissues. From the biopsy of the fragments of First Group at the two months' lapse after the self-transplantation, observed was an almost normal construction of the pancreas with a slight change in formation of fiber in the exocrine secretion tissues.

## Claims

1. An internal organ-preserving liquid comprising an undiluted liquid of a perfluorocarbon compound, or an emulsion containing the same at a high concentration as an active ingredient.

2. An internal organ-preserving liquid as claimed in Claim 1, wherein the perfluorocarbon compound is in a liquid form at room temperature.

3. An internal organ-preserving liquid as claimed in Claim 1, wherein the perfluorocarbon compound is selected from the group consisting of perfluorohydrocarbons having 9-12 carbon atoms and perfluoro tert-amines having 9-12 carbon atoms.

4. An internal organ-preserving liquid as claimed in Claim 1, wherein a concentration of the perfluorocarbon compound in the emulsion is not less than 50%(w/v).

5. A method of preserving internal organs, characterized by bringing the internal organs into contact with an undiluted liquid of a perfluorocarbon compound with oxygen dissolved therein, or with an emulsion containing the same at a high concentration.

6. A method of preserving internal organs as claimed in Claim 5, wherein dissolution of oxygen is conducted by bubbling oxygen in an undiluted liquid of a perfluorocarbon compound, or an emulsion containing the same at a high concentration.

7. A method of preserving internal organs as claimed in Claim 5, wherein the perfluorocarbon compound is in a liquid form at room temperature.

8. A method of preserving internal organs as claimed in Claim 5, wherein the perfluorocarbon compound is selected from the group consisting of perfluorohydrocarbons having 9-12 carbon atoms and perfluoro tert-amines having 9-12 carbon atoms.

9. A method of preserving internal organs as claimed in Claim 5, wherein a concentration of the perfluorocarbon compound in the emulsion is not less than 50%(w/v).

European
Patent Office

**EUROPEAN SEARCH
REPORT**

Application Number

**EP 90 12 3772**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | TRANSPLANTATION, vol. 47, no. 5, May 1989, pages 776-778, Baltimore, US; T. KAWAMURA et al.: "Seventy-two-hour preservation of the canine pancreas by the two-layer (euro-collins' solution/perfluorochemical) cold storage method" * Whole article * | 1-4 | A 01 N 1/02 |
| X | US-A-3 993 581  (THE GREEN CROSS CORP.) * Column 5, lines 3-24 * & JP-A-58 225 013 (Cat. D) | 1-4 | |
| X | EP-A-0 282 949  (AIR PRODUCTS AND CHEMICALS, INC.) * Claims * | 1-4 | |
| X | DE-A-2 319 971  (ALLIED CHEMICAL CORP.) * Page 2, lines 9-11 * | 1-3 | |
| | | | TECHNICAL FIELDS SEARCHED (Int. Cl.5) |
| | | | A 01 N |

The present search report has been drawn up for all claims

| Place of search | Date of completion of search | Examiner |
|---|---|---|
| The Hague | 26 March 91 | DONOVAN T.M. |